# FASCICULE DE BREVET EUROPEEN

(11) **EP 2 488 403 B1**
(45) Date de publication et mention de la délivrance du brevet: **04.12.2013**
(21) Numéro de dépôt: 10785102.4
(22) Date de dépôt: 12.10.2010
(51) Int. Cl.: B62D 25/20, B60K 1/04, B60L 3/00, B60L 11/18

(54) **STRUCTURE DE VEHICULE COMPRENANT UNE BATTERIE**
FAHRZEUGSTRUKTUR MIT EINER BATTERIE
VEHICLE STRUCTURE INCLUDING A BATTERY

(30) Priorité: 12.10.2009 FR 0957126
(43) Date de publication de la demande: 22.08.2012
(73) Titulaire: Compagnie Plastic Omnium, 69007 Lyon (FR)
(72) Inventeur: ANDRE, Gérald, F-01500 Amberieu En Bugey (FR); MARTIN, Laurent, F-07340 Peaugres (FR); GINJA, Stéphane, F-01500 Amberieu En Bugey (FR); GRANDO, Jérôme, F-38390 Vertrieu (FR); CHERON, Hugues, F-01800 Meximieux (FR); REBUEL, Yves, F-75018 Paris (FR)
(74) Mandataire: Remy, Vincent Noel Paul
(86) Numéro de dépôt international: PCT/FR2010/052156
(87) Numéro de publication internationale: WO 2011/045524

(56) Documents cités:
- EP-A1- 2 070 754
- EP-A2- 1 088 694
- US-A- 4 365 681

## Description

La présente invention concerne une structure de véhicule, notamment pour un véhicule automobile comportant un moteur de propulsion électrique, soit un véhicule électrique ou un véhicule hybride, ayant de préférence une autonomie importante.

On connaît dans l'état de la technique un véhicule automobile comprenant une caisse en blanc, composée en partie inférieure d'éléments structurels longitudinaux et d'éléments structurels transversaux. Ces éléments sont plus particulièrement des profilés métalliques fermés et s'étendent respectivement selon la direction longitudinale du véhicule ou la direction transversale de celui-ci. Les éléments structurels longitudinaux peuvent s'étendre entre les essieux avant et arrière du véhicule et seront alors désignés « bas de caisse » dans le reste de la demande (bien qu'ils puissent être désignés également « longerons » par d'autres spécialistes du domaine). Ils peuvent également être situé en avant ou en arrière de ces essieux, auquel cas ils seront désignés « longerons » dans le reste de la demande (bien qu'ils puissent être désignés également « longeronnets » par d'autres spécialistes du domaine). Les éléments structurels transversaux seront désignés « traverses » dans le reste de la demande.

On connaît plus particulièrement, notamment des documents FR 2 890 366 et EP 2070754, un véhicule automobile comprenant un plancher réalisé en deux parties superposées, ce plancher intégrant une batterie électrique de véhicule agencée entre les deux parties du plancher. Ce plancher est mis en place de façon à être relié aux éléments structurels longitudinaux et transversaux de la caisse en blanc du véhicule. Le document EP 2070754 décrit le préambule des revendications 1 et 12.

Un tel plancher est adapté pour des véhicules possédant une batterie de capacité peu importante, par exemple pour des véhicules hybrides comprenant à la fois un moteur à propulsion thermique et un moteur à propulsion électrique. Toutefois, lorsque la capacité de la batterie augmente, ce qui engendre une augmentation de son volume, l'architecture de l'état de la technique nécessite de surélever les traverses du véhicule et de redimensionner les éléments structurels, voire d'en ajouter de nouveaux, pour renforcer la partie inférieure de la caisse et éviter que la batterie ne soit endommagée lors d'un choc impliquant le véhicule.

Une telle architecture de véhicule est ainsi peu avantageuse car elle augmente le poids du véhicule tout en diminuant la place disponible à l'intérieur de l'habitacle.

L'invention a pour but de remédier aux inconvénients précités en proposant une architecture de véhicule adaptée aux batteries de plus grande capacité.

A cet effet, l'invention a pour objet une structure de véhicule comprenant un élément structurel longitudinal à chacun de ses bords latéraux, et également :
- au moins deux coques essentiellement horizontales et superposées de manière à former un logement entre celles-ci, chacune des coques étant reliées à au moins un des deux éléments structurels longitudinaux,
- au moins un composant de batterie comprenant au moins une unité de stockage d'énergie, agencé dans le logement,
- au moins un élément de fixation reliant une coque à un organe situé dans le logement et/ou à l'autre coque, le ou les éléments de fixation étant agencés de sorte que le ou au moins un des composants de batterie se trouve en compression selon la direction de superposition des coques, correspondant essentiellement à la direction verticale.

Du fait des éléments de fixation permettant de mettre les composants de batterie en compression entre les coques, la rigidité de l'ensemble des coques est augmentée et leur comportement en réponse au choc est amélioré.

Les composants comprennent en effet généralement une enveloppe permettant de protéger les unités de stockage d'énergie contre les agressions extérieures, ces enveloppes possédant une certaine rigidité permettant d'augmenter la contribution de l'ensemble des coques et des composants à la structure du véhicule. En outre, lors d'un choc, les composants compressés reprennent une partie des efforts dus au choc. Comme une partie de la gestion du choc est assurée par ces composants, formant des éléments fonctionnels et inutilisés dans l'état de la technique pour cet usage, on peut s'affranchir de la présence de certaines des traverses sur la caisse en blanc du véhicule. La rigidité du véhicule dans certaines régions de la partie inférieure de celui-ci peut en effet être assurée par les éléments longitudinaux et l'ensemble des coques.

Au vu de l'absence des traverses dans les régions des coques, ces dernières peuvent être de dimensions adaptées pour stocker un système de batterie de grande capacité, formé par les composants, sans pour autant diminuer l'espace disponible dans l'habitacle du véhicule relativement aux véhicules de l'état de la technique.

La structure de véhicule selon l'invention est donc apte à former un véhicule hybride ou électrique comprenant une batterie de grande capacité et ayant une architecture relativement légère, peu encombrante et résistante aux chocs.

La structure est de préférence apte à supporter l'effort dû à un choc à haute vitesse, soit un choc se produisant à plus de 15 km/h. Par « supporter l'effort dû au choc », on entend que l'ensemble des coques, des composants et des éléments de fixation est apte à recevoir plus de 20% de l'effort maximum dynamique total reçu par le véhicule.

La structure de véhicule selon l'invention peut également comprendre l'une ou l'autre des caractéristiques de la liste suivante :
- chaque coque comprenant une pluralité d'extrémités transversales, s'étendant selon une direction essentiellement horizontale (ou perpendiculaire à la direction de superposition des coques), chaque composant est situé à distance d'une même extrémité transversale de la coque, de préférence à une distance supérieure à 2 cm, notamment 5 cm. Plus particulièrement, le ou chacun des composants est agencé pour être situé à distance des extrémités latérales de chaque coque, aptes à jouxter les éléments structurels longitudinaux. Du fait de la distance "de garde" conservée entre les composants formant le système de batterie et les extrémités des coques, les composants de batterie, coûteux, peuvent rester intacts même lorsque le véhicule subit un choc. En effet, la partie extrême des coques peut absorber l'énergie liée au choc en se déformant sans pour autant que d'autres éléments du véhicule n'entrent en contact avec les composants de batterie suite à un tel choc,
- le ou au moins un composant est en compression entre une coque et un organe relié à l'autre coque. En particulier, le ou au moins un élément de fixation s'appuie sur le ou au moins un composant ou est relié à un organe de liaison en appui sur le ou au moins un composant. Les éléments de fixation peuvent alors comprendre une excroissance telle qu'un plateau, ou épaulement, s'appuyant sur un composant de batterie ou deux composants adjacents. L'élément de fixation peut alors traverser le ou au moins un des composants,
- les deux coques sont reliées entre elles à toutes leurs extrémités transversales, directement ou à l'aide d'au moins un élément intermédiaire, de sorte que le logement constitue une cavité fermée, de préférence avec interposition d'un joint de sorte que le logement forme une cavité étanche. On améliore ainsi la protection apportée aux composants de batterie et aux occupants vis à vis de ces composants de batterie,
- l'ensemble formé par les coques et éventuellement le ou les éléments intermédiaires constitue une pièce d'un seul tenant apte à être rapporté en une opération relativement au ou aux éléments structurels longitudinaux, notamment entre les éléments longitudinaux ou sous ceux-ci. L'ensemble forme ainsi un module autoporté et indépendant qui peut être assemblé en dehors de la chaîne principale de montage du véhicule. Cela est avantageux lors du montage du véhicule car cela permet de réduire les coûts mais également au cours de la vie de celui-ci, la pièce comportant les composants de batterie pouvant être démontés et changés pour des raisons de maintenance sans avoir à démonter la caisse en blanc du véhicule. Une telle pièce, malgré ses potentielles grandes dimensions, se déforme peu car elle est maintenue en partie centrale par les éléments de fixation. On notera que des pièces peuvent être rapportées entre les éléments longitudinaux sous forme de module, chaque module étant constitué par plusieurs pièces assemblées formant des sous-modules de taille inférieure, notamment de dimension transversale inférieure, par exemple au nombre de 1 à 5. Un tel module est plus facilement manipulable qu'une grande pièce, et des pièces de dimensions moins importantes permettent aussi de moduler l'autonomie (donc l'investissement) fournie au véhicule. Ces pièces peuvent comprendre chacune deux coques de plus petite dimensions, renfermant des composants de batterie en compression entre celles-ci du fait d'éléments de fixation et sont reliées à un seul élément longitudinal du véhicule,
- au moins une coque est conformée à au moins une de ses extrémités transversales pour absorber l'énergie due à un choc haute vitesse, soit un choc se produisant à plus de 15 km/h. Par « absorber l'énergie due au choc », on entend que la coque est apte à absorber au moins 20% de l'énergie due à un tel choc. L'extrémité est de préférence la ou l'une de celle située à distance de chacun des composants. Grâce à de telles formes, la zone d'extrémité de la coque se déforme et absorbe plus efficacement les chocs, ce qui permet de réduire la distance minimale entre les composants et les extrémités de la coque et ainsi de diminuer l'encombrement des coques pour une batterie de capacité donnée. Chaque coque peut par exemple comprendre un corps creux, des ondulations ou des formes en accordéon permettant le bottelage, ou flambage de la coque sur une partie de sa longueur, au voisinage de son extrémité. Elle peut en outre comprendre des zones fusibles ou des zones de déformation programmées, telle que des zones de pliage,
- le ou les éléments de fixation sont agencés pour être à distance d'au moins une même extrémité transversale d'au moins une coque, de préférence l'extrémité également située à distance des composants, ce qui permet une meilleure déformation de celle-ci et une absorption d'énergie plus efficace,
- au moins l'une des deux coques ou éventuellement le ou l'un des éléments intermédiaires est muni de moyens d'absorption d'énergie au voisinage d'au moins une des extrémités transversales de la coque. De tels moyens d'absorption d'énergie peuvent comprendre un absorbeur en mousse ou un absorbeur en thermoplastique, par exemple nervuré, notamment en nid d'abeille. De tels moyens peuvent être placés dans le logement formé par les coques ou plus préférentiellement, pour éviter l'endommagement des composants de batterie par les moyens d'absorption d'énergie en cas de choc, à l'extérieur du logement, entre la coque ou la pièce intermédiaire et l'élément structurel longitudinal adjacent. De tels moyens permettent encore de diminuer les risques d'endommagement des composants de batterie, suite à un choc subi par le véhicule,
- un moyen élastique est disposé entre le ou au moins un composant et au moins une des coques de façon à exercer une force de rappel sur le composant. L'élément de fixation peut alors former des moyens de positionnement, par exemple de centrage et/ou de maintien, du moyen élastique pour maintenir celui-ci en place au cours de la vie du véhicule. La force de rappel du moyen élastique peut également être exercée sur le composant par un élément intermédiaire en appui sur le composant de batterie tel que l'élément de fixation. Un tel moyen élastique, formé par exemple par un ressort ou une rondelle élastique, forme un élément de rattrapage de jeu permettant le contact et la transmission des efforts entre les coques et les composants malgré la dispersion dans les dimensions des composants et/ou des coques liée notamment aux dérives de fabrication de ceux-ci. Un tel moyen permet ainsi d'assurer transmission des efforts depuis les coques sur l'enveloppe du composant de batterie, notamment lors d'un choc, et ce même si, dans cette situation, la rondelle devrait être complètement comprimée suite à un effet de flambement de la plaque, et d'assurer meilleure répartition des efforts sur l'enveloppe du composant, celle-ci pouvant ne pas être sollicitée qu'au voisinage de l'élément de fixation. Le moyen élastique peut également former l'organe de liaison sur lequel s'appuie l'élément de fixation,
- au moins un des composants comprend des moyens de liaison avec un composant adjacent, comprenant notamment une forme apte à assurer une accroche mécanique avec une forme complémentaire d'un composant adjacent, par exemple par encliquetage. Cela permet un meilleur positionnement des composants relativement aux coques et entre eux,
- au moins une des coques comprend des moyens de positionnement du ou d'au moins un des composants relativement à celle-ci, ce qui permet d'éviter que les composants se rapprochent de l'extrémité des coques suite à une perturbation, telle qu'un petit choc,
- la coque supérieure forme un plancher du véhicule, ou forme un support pour un plancher du véhicule. Dans ce cas, une telle coque peut être apte à supporter les sièges, les fixations pour les ceintures de sécurité,
- au moins une des coques comprend au moins un élément fonctionnel supplémentaire, tels de que moyens de connexion électrique permettant de relier électriquement entre eux des composants ou de relier ceux-ci à des éléments externes au logement tels que le moteur électrique. Des moyens de circulation d'air peuvent également être ménagés dans le logement, au moins l'une des coques pouvant notamment être conformée pour former de tels moyens. Ces moyens de circulation d'air, situés au voisinage du ou des composants de batterie, permettent leur refroidissement et évitant leur surchauffe,
- au moins une des coques est réalisée au moins partiellement en un matériau électriquement conducteur et comporte de préférence essentiellement sur toute sa surface une couche de matériau électriquement conducteur. Un matériau électriquement conducteur est par exemple un matériau métallique agencé dans la coque notamment sous forme d'une plaque ou d'un grillage, le métal étant par exemple de l'aluminium ou de l'acier. Le ou au moins un des éléments intermédiaires peut également être réalisé au moins partiellement en un matériau électriquement conducteur. Une coque réalisée au moins partiellement en un tel matériau permet d'obtenir un comportement du type cage de Faraday et donc d'atténuer l'émission les ondes électromagnétiques dues au fonctionnement des composants situés à l'intérieur du logement (batterie, connectique, électronique), de façon à éviter de perturber les autres équipements électroniques ou électriques du véhicule et également d'éviter de soumettre les occupants du véhicule à un flux d'ondes électromagnétique trop important, potentiellement dangereux pour leur santé. Cela permet également en sens inverse de protéger les composants électroniques ou électriques situés dans le logement d'ondes électromagnétiques provenant du reste du véhicule. Une coque métallique permet également d'assurer une bonne rigidité et résistance aux chocs de ces coques. En outre, la ou les coques peuvent servir, lorsqu'elles sont réalisées en métal, de moyen de conduction thermique pour refroidir ou préchauffer les composants de batterie,
- le logement situé entre les deux coques présente une épaisseur comprise entre 100 et 400 millimètres dans la direction de superposition des coques, ce qui permet de mettre en place une batterie de capacité désirée sans pour autant dépasser la hauteur conventionnelle prévue pour les éléments structurels longitudinaux. Il est donc possible de minimiser l'encombrement du véhicule.

L'invention a également pour objet une pièce de véhicule, destinée à être reliée à au moins un élément structurel de la caisse en blanc du véhicule, situé à un bord latéral de celle-ci, comprenant :
- au moins deux coques superposées de manière à former un logement entre celles-ci,
- au moins un composant de batterie, comprenant au moins une unité de stockage d'énergie, agencé dans le logement,
- au moins un élément de fixation reliant une coque à un organe situé dans le logement ou à l'autre coquille, le ou les éléments de fixation étant agencés de sorte que le ou au moins un des composants de batterie se trouve en compression selon la direction de superposition des coquilles.

En particulier, chaque pièce s'étend sur tout ou partie de la dimension de la caisse en blanc entre les éléments structurels longitudinaux situés aux bords latéraux respectifs de la caisse en blanc.

Une telle pièce est totalement indépendante de la caisse du véhicule et peut être fabriquée hors de la chaîne de montage principale du véhicule puis cette pièce ou une pluralité de pièces pré-assemblées en module peut être ensuite rapportée sur la caisse du véhicule, entre les éléments structurels longitudinaux.

La pièce selon l'invention peut également comprendre l'une ou plusieurs des caractéristiques listées plus haut.

L'invention sera mieux comprise à la lecture de la description qui va suivre, donnée uniquement à titre d'exemple et faite en se référant aux dessins dans lesquels :
- la figure 1 est une vue de dessus d'une partie inférieure d'un véhicule selon un mode de réalisation particulier de l'invention,
- la figure 2 est une vue en coupe transversale du véhicule de la figure 1 selon A-A, représentant une pièce selon un premier mode de réalisation de l'invention,
- la figure 3 est une vue d'un détail de la pièce de la figure 2,
- la figure 4 est une vue en coupe transversale du véhicule de la figure 1 selon B-B, représentant une pièce selon un deuxième mode de réalisation de l'invention,
- la figure 5 est une vue d'un détail de la pièce de la figure 2.

On a représenté sur les figures une partie inférieure, également appelée soubassement d'une structure de véhicule automobile 10, une telle structure ayant pour rôle de résister aux contraintes mécaniques auquel est soumis le véhicule et de porter la carrosserie 13 de celui-ci. Cette structure comprend la caisse du véhicule 12, comportant deux éléments longitudinaux 14 s'étendant sur chaque bord latéral du véhicule. Elle comprend également des traverses 16 s'étendant entre les éléments longitudinaux 14.

Chaque élément longitudinal comprend une première partie s'étendant entre les essieux du véhicule et formant bas de caisse 18, une partie s'étendant en arrière de l'essieu arrière et formant longeron 20, surélevée relativement au bas de caisse 18, et une partie de liaison 22 surplombant l'essieu. Ces éléments 18-22 sont généralement réalisés à l'aide de profilés emboutis en métal, notamment en tôle.

Les traverses 16 sont situées au niveau de l'extrémité avant des bas de caisse 18, au niveau de l'essieu arrière, entre les parties de liaison 22, et au niveau de l'extrémité arrière du véhicule, entre les longeron 20.

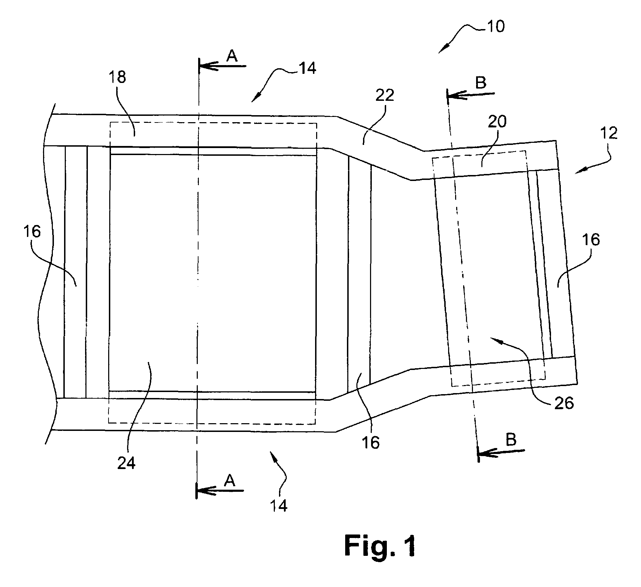

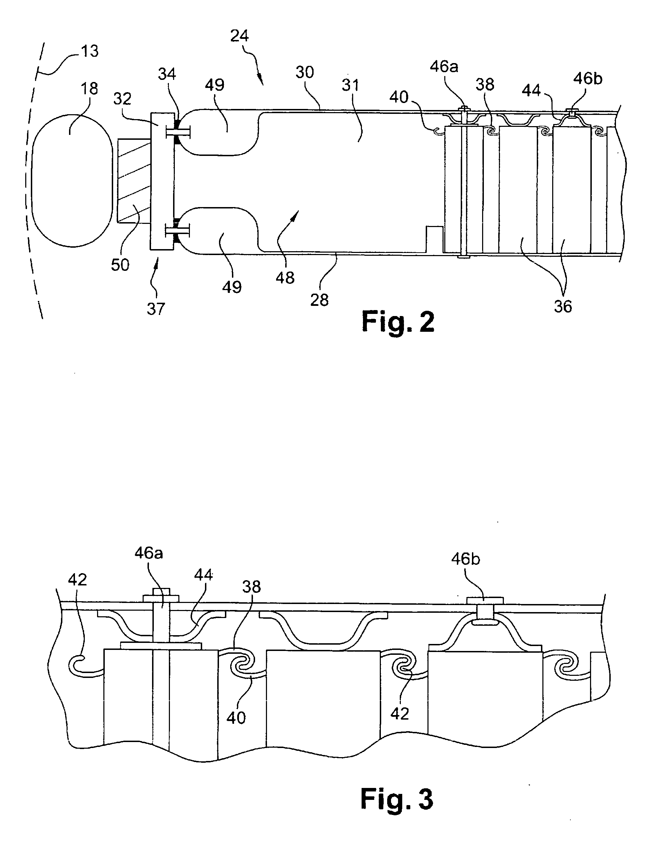

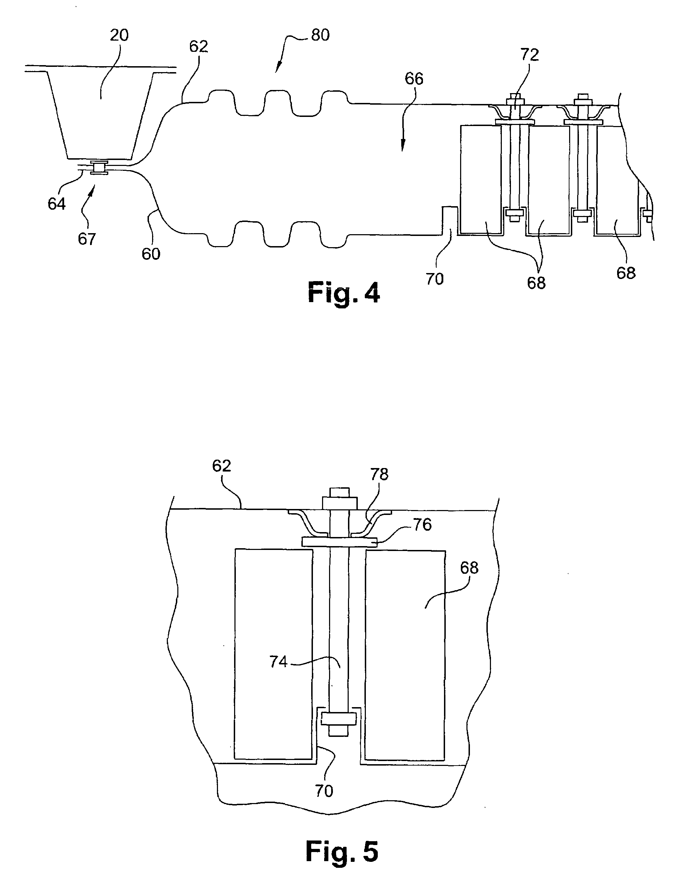

Comme on le voit également sur la figure 1, la caisse comprend un dégagement important, supérieur à 50 cm, de préférence 1 m, entre deux traverses consécutives. Des modules 24, 26 sont agencés dans les dégagements ménagés entre les traverses. Le module 24 est plus particulièrement situé entre les bas de caisse 18 et la pièce 26 est situé sous les longerons 20. Ces modules sont formés par une seul pièce assemblée hors de la chaîne de montage et sont décrits plus en détails sur les figures 2 à 5 et font partie intégrante de la structure du véhicule car ils supportent une partie des contraintes subies par celui-ci.

On va tout d'abord décrire une première pièce formant module 24 agencée entre les bas de caisse du véhicule de la figure 1, à l'aide des figures 2 et 3.

On voit sur la figure 2 que la pièce 24 comprend une première coque, ou coque inférieure 28, et d'une deuxième coque, ou coque supérieure 30, les coques inférieures et supérieures étant essentiellement horizontales et superposées selon la direction verticale. Ces coques 28, 30 sont de forme essentiellement planes et sont réalisées en métal, notamment en aluminium, à l'aide d'une feuille repliée de sorte que chaque coque comprend deux parois superposées. Les coques 28, 30 sont dimensionnées pour être mises en place dans le dégagement entre les bas de caisse du véhicule et comprennent notamment chacune une dimension essentiellement identique à la distance entre les bas de caisse.

Ces coques sont en outre assemblées de façon à délimiter un logement 31 situé entre celles-ci, un tel logement ayant de préférence une épaisseur comprise entre 100 et 400 mm. Pour cela, les coques sont reliées entre elles à chacune de leurs extrémités transversales (c'est à dire selon une direction perpendiculaire à la direction de superposition des coques, soit leurs extrémités s'étendant essentiellement selon la direction horizontale lorsque la pièce est montée sur le véhicule) à l'aide d'un élément intermédiaire 32 formant un cadre périphérique dimensionné pour entourer chacune des coques. Elles sont plus particulièrement reliées au cadre 32 par vissage avec interposition d'un joint 34. Le logement 31 forme ainsi une cavité fermée et de préférence étanche.

La pièce composée des coques, de l'élément intermédiaire et des éléments contenus dans le logement est d'un seul tenant et est rapportée en une opération entre les bas de caisses 18 du véhicule. Elle peut être ainsi fabriquée en dehors de la chaîne de fabrication du véhicule, ce qui permet de limiter l'espace occupé en bord de chaîne, de limiter les manipulations et donc de réaliser une économie des coûts de fabrication.

Cette pièce comprend des composants de batterie 36 agencés dans le logement 31. Ces composants de batterie 36 comprennent au moins une unité de stockage d'énergie, chaque unité comprenant une anode et une cathode mise en place dans un milieu permettant la conduction d'ions, tel qu'un gel. Chaque unité de stockage d'énergie peut par exemple être isolée de l'extérieur par un film plastique étanche. Le composant de batterie 36, comprenant une ou plusieurs unités de stockage d'énergie, comprend en outre une enveloppe rigide, réalisée en matériau métallique ou plastique, entourant les unités de stockage d'énergie et protégeant celles-ci des agressions extérieures.

L'ensemble de ces composants 36 forme un système de batterie pour l'alimentation d'un moteur électrique du véhicule et sont reliés électriquement entre eux à l'aide d'éléments de connectique (non représentés sur les figures) situés de préférence sur les faces des deux coques tournées vers l'intérieur du logement. Une telle pièce 24 peut notamment être conformée pour ne comprendre qu'un seul élément de raccordement au système électrique du véhicule, raccordement situé à l'extérieur du logement 31, les autres connexions électriques étant situées à l'intérieur du logement, non atteignables depuis l'extérieur de celui-ci, de sorte que le fonctionnement électrique de la batterie reste alors volontairement inaccessible pour l'utilisateur du véhicule ou même pour le garagiste.

Les composants 36 sont agencés en partie centrale des coques 28, 30, à une distance supérieure à une distance prédéterminée des extrémités latérales 37 de chacune des coques, jouxtant les bas de caisse 18. La distance prédéterminée est d'au moins 2 cm et, dans cet exemple, d'environ 5 cm.

Chaque composant 36 est posé sur la coque inférieure 28 et est assemblé à un composant adjacent à l'aide de moyens de liaison situés sur chacun des composants. Ces moyens sont constitués dans cet exemple par des formes complémentaires situées sur des faces opposées du composant. Sur une de ses faces, le composant comprend en effet une languette longitudinale 38 élastique d'un seul tenant avec l'enveloppe en forme de crochet ayant une extrémité libre orientée vers le haut. Sur la face opposée du composant, celui-ci comprend en outre une languette longitudinale 40 élastique en forme de crochet ayant une extrémité libre orientée vers le bas. Les deux languettes sont agencées sur le composant de sorte qu'une languette d'un composant donné et la languette opposée du composant adjacent puissent coopérer. Chaque languette comprend en outre un ergot 42 à son extrémité libre, pour éviter qu'elles ne se détachent l'une de l'autre une fois assemblées. Les composants une fois assemblés à l'aide des moyens de liaison peuvent ainsi être maintenus plus facilement immobiles entre les coques, du fait de leur inertie.

Comme on le voit sur la figure 3, il subsiste en outre un espace entre chaque composant et la coque supérieure 30. Entre certains composants 36 et la coque supérieure, un organe de liaison 44 est interposé. Cet organe forme un moyen élastique, ici conformé comme une rondelle, et est réalisé en un matériau plastique. Il est en appui contre la coque 30 et le composant de batterie 36 ou un élément en appui contre le composant, tel qu'un élément de fixation 46, décrit ci-après, de façon à être légèrement déformé élastiquement et à exercer une force de rappel sur le composant. Il forme un élément de rattrapage du jeu permettant aux composants d'être en contact avec la coque supérieure malgré les dispersions des dimensions des composants.

La pièce comprend également des éléments de fixation 46 reliant la coque supérieure 30 à la coque inférieure 28 ou l'une des coques, ici la coque supérieure 30, à un élément situé dans le logement.

Le premier élément de fixation 46a relie plus particulièrement la coque supérieure 30 à la coque inférieure 28. Il comprend un corps de fixation 45a traversant le composant 36 et la rondelle 44, ainsi que les deux coques 28, 30. Il comprend en outre un plateau 47a situé en partie supérieure du corps, en appui contre l'extrémité supérieure du composant traversé par le corps. La rondelle 44 est agencée sur le corps de fixation, de façon à être en contact avec la coque 30 et le plateau 47a de l'élément de fixation, ce qui permet de transmettre les efforts de la coque vers le composant. L'élément de fixation 46a permet ainsi le bon positionnement de la rondelle élastique 44.

L'élément 46a est en outre fileté à chacune de ses extrémités et est relié dans chaque partie du corps dépassant des coques à un écrou en contact avec la face tournée vers l'extérieur de chacune des coques 28, 30.

Le deuxième élément de fixation 46b relie la rondelle 44 en appui sur le composant à la coque supérieure 32. Cette fixation est une fixation par vissage et peut être réalisée à l'aide d'un système classique vis-écrou. La rondelle 44 en appui sur le composant 36, en exerçant une force de rappel sur celui-ci, suffit pour compresser légèrement entre les deux coques et pour transmettre une partie des efforts de la coque supérieure vers le composant.

Les éléments de fixation 46a, 46b permettent de mieux reprendre les efforts s'exerçant sur la pièce en cas de choc et également d'augmenter la rigidité de la pièce, ce qui permet d'éviter de l'endommager lors de la manutention de celle-ci, et d'augmenter sa contribution à la structure du véhicule, évitant alors l'adjonction de traverses supplémentaires de compensation sur la caisse en blanc du véhicule alourdissant celle-ci.

Les éléments de fixation 46a, 46b sont également situés en partie centrale des coques, à distance des extrémités latérales des coques.

Le logement comprend donc à chacune de ses extrémités latérales une zone 48 dépourvue d'éléments de fixation et de composant 36. Cette zone est utilisée pour l'absorption des chocs à haute vitesse. A cet effet, chaque coque comprend, dans sa portion délimitant cette zone, des formes lui permettant de faciliter l'absorption des chocs. Chaque coque comprend plus particulièrement un corps creux 49 s'étendant à chacune de ses extrémités latérales. Un tel corps creux permet d'augmenter la rigidité de l'extrémité des coques et permet à celles-ci d'absorber plus d'énergie lors de leur déformation en cas d'un tel choc.

Pour absorber encore plus d'énergie lors du choc, la pièce comprend un absorbeur 50 formé par un bloc en mousse, agencé sur la surface externe de l'élément intermédiaire 32 fermant le logement 31 au voisinage de chacune des extrémités latérales des coques, de sorte que l'absorbeur est agencé entre le bas de caisse 18 et la pièce intermédiaire 32.

La pièce 24 est fabriquée de la façon suivante : tout d'abord, on met en place les composants de batterie 36 sous forme de blocs préassemblés à l'aide des moyens de liaison 38, 40 sur la coque inférieure 28. Puis, on met en place le corps 45a de l'élément de fixation 46a de sorte que le plateau 47a soit placé en appui sur l'extrémité supérieure du composant 36 et on visse un premier écrou à l'extrémité inférieure du corps, contre la face inférieure de la coque inférieure 28 de façon à maintenir le plateau 47a en appui sur le composant. On assemble ensuite le cadre 32 et la coque inférieure 28, avec interposition d'un joint 34.

On met ensuite en place la rondelle 44 sur le corps 45a de l'élément 46a et également la rondelle 44 et la vis de la fixation 46b puis on place la coque supérieure et on visse les écrous respectivement à l'extrémité supérieure du corps 45a de l'élément 46a et à celle de la vis de la fixation 46b de sorte que chaque écrou soit en butée contre la face supérieure de la coque supérieure 30. Lorsque la coque supérieure 30 est mise en place, les rondelles élastiques 44 sont contraintes de sorte qu'elles exercent une force de rappel sur le composant 36 ou l'élément de fixation 46a.

On assemble ensuite le cadre 32 à la coque supérieure 30 avec interpostion d'un joint de façon à former la pièce d'un seul tenant comprenant un logement étanche, puis on assemble celle-ci sur les bas de caisse du véhicule.

On va maintenant décrire une pièce selon un deuxième mode de réalisation de l'invention, cette étant la pièce formant le module 26 située à l'arrière du véhicule sur la figure 1. Une telle pièce comprend également une coque inférieure 60 et une coque supérieure 62, toutes deux réalisées en métal. Chacune des coques comprend une partie périphérique 64 plane et une partie centrale formant un relief. Les coques 60, 62 sont agencées de sorte que les reliefs sont en vis-à-vis et forment un logement 66 entre les coques 60, 62 lorsque les parties périphériques 64 des coques sont en contact. La coque supérieure 62 est plus particulièrement orientée pour que son relief forme une saillie alors que la coque inférieure 60 est orientée pour que son relief forme une dépression, une fois les coques assemblées.

Les coques sont reliées entre elles au niveau de leur partie périphérique par vissage avec interposition d'un joint de sorte que le logement 66 forme une cavité fermée. Les coques sont en outre dimensionnées pour pouvoir être reliées aux longerons, en présentant notamment une dimension sensiblement égale à la distance entre les longerons. La pièce 26 peut alors être également fixée sous les longerons 20 du véhicule par l'intermédiaire de la zone périphérique des coques, par vissage.

Des composants de batterie 68 sont également agencés dans le logement 66. Ces composants sont tels que décrits précédemment. Pour placer convenablement les composants dans le logement, la coque inférieure 62 comprend des saillies 70 formant un cadre délimitant un dégagement pour accueillir le composant, un tel cadre constituant des moyens de positionnement des composants de batterie 68 relativement aux coques et formant également une entretoise entre les composants.

La module comprend également des éléments de fixation 72 des coques inférieure 60 et supérieure 62 aux composants. Chaque élément de fixation comprend un corps de fixation 74 formant une tige traversant le logement entre deux composants et s'insérant dans des orifices superposés des coques supérieure et inférieure 60, 62. L'orifice de la coque inférieure est particulièrement ménagé dans la saillie 70.

Chaque élément de fixation comprend en partie supérieure du corps un plateau 76 en appui sur l'extrémité supérieure des deux composants 68 adjacents encadrant la saillie 70. Le corps de l'élément de fixation 72 est également fileté à son extrémité supérieure ainsi qu'à son extrémité inférieure et est relié dans chaque partie dépassant des coques à un écrou, respectivement en contact avec la face tournée vers l'extérieur de chacune des coques 60, 62. Ces éléments 72 permettent également de reporter les efforts dûs aux chocs des coques sur les composants.

La pièce comprend en outre un élément élastique 78 sous forme de rondelle mise en place à l'extrémité supérieure de l'élément de fixation, entre le plateau 76 de l'élément de fixation et la coque supérieure 62, de façon à être en contact avec la coque supérieure et le plateau et à exercer une force de rappel sur le plateau, et par ce biais, sur les composants 68.

Chaque composant 68 est situé à une distance supérieure à une distance prédéterminée de l'extrémité latérale 67 de chacune des coques. La distance prédéterminée est supérieure à 5 cm. Les éléments de fixation 72 décrits sont en outre situés à une distance supérieure à la distance prédéterminée de chacune des extrémités transversales des coques.

Le logement 66 comprend donc une zone en bordure du logement dépourvue de composant ou d'éléments de fixation. Cette zone est prévue pour se déformer en absorbant un choc à haute vitesse. Pour cela, chaque coque comprend dans sa partie délimitant la zone de bordure des ondulations 80 permettant la déformation programmée de la coque. Celle-ci se déforme en effet par bottelage, qui correspond à un flambage de la coque seulement sur une partie de sa longueur, au niveau de son extrémité latérale, du fait des ondulations qu'il présente. Une telle déformation permet une bonne absorption d'énergie.

Des pièces telles que décrites précédemment sont très avantageuses car elles permettent de mettre en place des batteries de très grandes capacités pour véhicule hybride ou électrique à l'aide d'une structure offrant une bonne résistance aux chocs et de poids peu important.

La pièce peut également comprendre des moyens de guidage de l'air au voisinage des composants pour permettre le refroidissement de ceux-ci ou d'autres éléments fonctionnels non représentés sur les figures.

On notera en outre que l'invention n'est pas limitée à ce qui a été décrit.

La structure du véhicule peut par exemple comprendre une pluralité de pièces formant des sous-modules plus petits, notamment de dimension transversale inférieure à ce qui a été décrit ci-dessus. Ainsi, chaque pièce, formée par une superposition de coques, est assemblée à au moins une autre pièce, dont elle est indépendante, en dehors de la chaîne de montage, de façon à former un module dimensionné pour être relié à chacun des éléments structurels longitudinaux, et rapporté en une fois sur la caisse de celui-ci.

Le véhicule peut comprendre un seul ou plus de deux modules ou ensemble de coques. Chaque ensemble de coque étant indépendant, le véhicule peut comprendre des ensembles identiques ou différents, lorsqu'il en comprend plus d'un.

Les coques peuvent également ne pas former un module et être mises en place directement sur les éléments de structure longitudinaux de façon à être reliées à ces éléments de façon indépendante l'une de l'autre. On peut également noter que le positionnement des traverses et des coques sur le véhicule n'est pas limité à ce qui a été décrit.

Chaque ensemble de coques pourrait également comprendre un seul composant de batterie comprenant un grand nombre d'unités de stockage d'énergie. Au contraire, chaque composant pourrait comprendre une unique unité de stockage d'énergie, un grand nombre de composants étant alors agencé dans le logement.

Les éléments de fixation ne sont pas non plus limités à ce qui a été décrit. Leur forme peut être modifiée. On peut également envisager des moyens de fixation autres que par vissage. Certains des éléments de fixation peuvent également être situés plus proches des extrémités transversales des coques que ce qui a été décrit.

On notera également que les composants et les éléments de fixation peuvent être distants de chaque extrémité selon les directions longitudinales et latérales des coques ou seulement d'une de ces extrémités en fonction des risques qu'ont ces extrémités d'être endommagées lors d'un choc à haute vitesse. Par exemple, lorsque les coques sont situées en partie arrière du véhicule, l'extrémité arrière de celles-ci peut être pourvue de moyens pour absorber les chocs.

L'ensemble de coques peut également être dépourvu de moyens élastiques. En outre, ces moyens élastiques peuvent également être d'autres moyens que ceux décrits. Par exemple, ces moyens peuvent comprendre un ressort agencé autour d'un élément de fixation.

La zone située en bordure des coques dépourvue de composants et d'éléments de fixation peut également être traversée par des éléments de fixation et/ou ne pas être conformée comme dans les exemples. La coque peut simplement comprendre une paroi plane à cet endroit. Elle peut également comprendre d'autres formes permettant de programmer la déformation des coques. En outre, des moyens supplémentaires d'absorption d'énergie peuvent être situés dans le logement au lieu ou en supplément des éléments situés à l'extérieur de ceux-ci. Les moyens d'absorption d'énergie ne sont pas non plus limités à un bloc de mousse. Il peuvent être constitués par un réseau de nervures en matériau thermoplastique.

Les moyens de positionnement des composants relativement à la coque sont également optionnels. Les moyens de liaison des composants sont également optionnels ou peuvent être conformés différemment de ce qui a été décrit. Les composants peuvent également comprendre des moyens de liaison avec d'autres composants situés sur des faces non représentées sur la figure. Les moyens de positionnement et de liaison pourraient également être combinés.

L'ensemble de coque peut également former un support pour le plancher du véhicule. Il peut alors être apte à reprendre les efforts dus aux points de fixation des ceintures sur le plancher.

Les matériaux utilisés pour les différents éléments du véhicule peuvent également différer de ce qui a été décrit ci-dessus. De même, la forme des différents éléments n'est pas limitée à ce qui a été décrit. On pourrait par exemple envisager que deux composants de batterie soient superposés à l'intérieur du logement, selon la direction de superposition.

## Revendications

1. Structure de véhicule (10) comprenant un élément structurel longitudinal (14) à chacun de ses bords latéraux, et également :
- au moins deux coques (28, 30 ; 60, 62) essentiellement horizontales, superposées de manière à former un logement (31 ; 66) entre celles-ci, chacune des coques étant reliées à au moins un des deux éléments structurels longitudinaux (14),
- au moins un composant de batterie (36 ; 68) comprenant au moins une unité de stockage d'énergie, agencé dans le logement,
- au moins un élément de fixation (46 ; 72) reliant une coque à un organe (36, 44) situé dans le logement et/ou à l'autre coque (28, 30 ; 60, 62), la structure (10) étant **caractérisée en ce que** le ou les éléments de fixation sont agencés de sorte que le ou au moins un des composants de batterie se trouve en compression selon la direction de superposition des coques, correspondant essentiellement à la direction verticale.

2. Structure selon la revendication précédente, dans laquelle le ou au moins un composant (36.; 68) est en compression entre une coque (28, 30 ; 60, 62) et un organe (44, 46a, 72) relié à l'autre coque.

3. Structure selon la revendication précédente, dans laquelle le ou au moins un élément de fixation (46a, 46b, 72) s'appuie sur le ou au moins un composant ou est relié à un organe de liaison (44) en appui sur le ou au moins un composant.

4. Structure selon l'une quelconque des revendications précédentes, dans laquelle, chaque coque comprenant une pluralité d'extrémités transversales (37 ; 67), s'étendant selon une direction essentiellement horizontale, chaque composant (36 ; 68) est situé à distance d'une même extrémité transversale de la coque, de préférence à une distance supérieure à 2 cm, notamment 5 cm.

5. Structure selon l'une quelconque des revendications précédentes, dans laquelle les deux coques (28, 30; 60, 62) sont en outre reliées entre elles à leurs extrémités transversales, directement ou à l'aide d'au moins un élément intermédiaire (32), de sorte que le logement (31 ; 62) forme une cavité fermée, de préférence avec interposition d'un joint (34) de sorte que la cavité soit étanche.

6. Structure selon la revendication précédente, dans laquelle l'ensemble formé par les coques (28, 30 ; 60, 62) et éventuellement le ou les éléments intermédiaires (32) constitue une pièce (24, 26) d'un seul tenant, apte à être rapportée en une opération relativement au ou aux éléments structurels longitudinaux (14).

7. Structure selon l'une quelconque des revendications précédentes, dans laquelle au moins une coque (28, 30 ; 60, 62) est conformée à au moins une de ses extrémités transversales (37, 67) pour absorber l'énergie due à un choc de type haute vitesse, cette extrémité étant notamment celle ou l'une de celles situées à distance des composants, la coque comprenant de préférence un corps creux (49) ou des ondulations (80) au voisinage de l'extrémité.

8. Structure selon l'une quelconque des revendications précédentes, dans laquelle au moins l'une des deux coques ou éventuellement le ou l'un des éléments intermédiaires (32) est muni de moyens d'absorption d'énergie (50) au voisinage d'au moins une extrémité transversale d'au moins une coque.

9. Structure selon l'une quelconque des revendications précédentes, dans laquelle un moyen élastique (44 ; 78) est disposé entre le ou au moins un composant (36 ; 68) et au moins une des coques (28, 30 ; 60, 62), de façon à exercer une force de rappel sur le composant.

10. Structure selon l'une quelconque des revendications précédentes, dans laquelle au moins une des coques (28, 30 ; 60, 62) est réalisée au moins partiellement en un matériau électriquement conducteur, tel qu'un matériau métallique, et comprend notamment au moins une couche métallique sur essentiellement toute sa surface.

11. Structure selon l'une quelconque des revendications précédentes, dans laquelle des moyens de circulation d'air sont ménagés dans le logement, de préférence au moins une coque est conformée pour former de tels moyens.

12. Pièce de véhicule (24 ; 26) destinée à être reliée à au moins un élément structurel longitudinal (14) d'une caisse du véhicule, situé à un bord latéral de celle-ci, comprenant :
- au moins deux coques (28, 30 ; 60, 62) superposées de manière à former un logement (31 ; 66) entre celles-ci,
- au moins un composant de batterie (36 ; 68), comprenant au moins une unité de stockage d'énergie, agencé dans le logement,
- au moins un élément de fixation (46 ; 72) reliant une coque à un organe (36, 44) situé dans le logement ou à l'autre coque (28, 30 ; 60, 62), la pièce étant **caractérisée en ce que** le ou les éléments de fixation sont agencés de sorte que le ou au moins un des composants de batterie se trouve en compression selon la direction de superposition.

## Patentansprüche

1. Fahrzeugaufbau (10), der ein Längsaufbauelement (14) an jedem seiner Seitenränder aufweist und auch:
- mindestens zwei Schalen (28, 30; 60, 62), die im Wesentlichen horizontal sind, die derart überlagert sind, dass sie eine Aufnahme (31; 66) zwischen diesen bilden, wobei jede der Schalen mit mindestens einem der Längsaufbauelemente (14) verbunden ist,
- mindestens ein Batteriebauteil (36; 68), das mindestens eine Energiespeichereinheit, die in der Aufnahme eingerichtet ist, aufweist,
- mindestens ein Befestigungselement (46; 72), das eine Schale mit einem Organ (36, 44) verbindet, das sich in der Aufnahme befindet, und/oder mit der anderen Schale (28, 30; 60, 62),
- wobei der Aufbau (10) **dadurch gekennzeichnet ist, dass** das oder die Befestigungselemente derart eingerichtet sind, dass das oder mindestens eines der Batteriebauteile entlang der Überlagerung srichtung der Schalen, die im Wesentlichen der vertikalen Richtung entspricht, in Kompression befindet.

2. Aufbau nach dem vorhergehenden Anspruch, wobei das oder mindestens ein Bauteil (36; 68) zwischen einer Schale (28, 30; 60, 62) und einem Organ (44, 46a, 72), das mit der anderen Schale verbunden ist, in Kompression ist.

3. Aufbau nach dem vorhergehenden Anspruch, wobei das oder mindestens ein Befestigungselement (46a, 46b, 72) an dem oder mindestens einem Bauteil anliegt oder mit einem Verbindungsorgan (44) in Anlage an dem oder an mindestens einem Bauteil verbunden ist.

4. Aufbau nach einem der vorhergehenden Ansprüche, wobei jede Schale eine Mehrzahl von Querenden (37; 67) aufweist, die sich entlang einer im Wesentlichen horizontalen Richtung erstrecken, wobei jedes Bauteil (36; 68) von einem selben Querende der Schale entfernt ist, vorzugsweise in einer Entfernung, die größer als 2 cm, insbesondere 5 cm ist.

5. Aufbau nach einem der vorhergehenden Ansprüche, bei dem die zwei Schalen (28, 30; 60, 62) ferner untereinander an ihren Querenden direkt oder mit Hilfe mindestens eines Zwischenelements (32) derart verbunden sind, dass die Aufnahme (31; 62) einen geschlossenen Hohlraum bildet, vorzugsweise mit Einfügung einer Dichtung (34), so dass der Hohlraum dicht ist.

6. Aufbau nach dem vorhergehenden Anspruch, wobei die von den Schalen (28, 30; 60, 62) und eventuell dem oder den Zwischenelementen (32) gebildete Einheit ein Teil (24, 26) aus einem Stück bildet, das geeignet ist, um in einem Vorgang relativ zu dem Längsaufbauelement oder den Längsaufbauelementen (14) angebaut zu werden.

7. Aufbau nach einem der vorhergehenden Ansprüche, bei dem mindestens eine Schale (28, 30; 60, 62) an mindestens einem ihrer Querenden (37, 67) ausgebildet ist, um die Energie aufgrund eines Stoßes des Typs mit hoher Geschwindigkeit zu absorbieren, wobei dieses Ende insbesondere dasjenige oder eines derjenigen ist, die sich in Entfernung von den Bauteilen befinden, wobei die Schale vorzugsweise einen Hohlkörper (49) oder Wellungen (80) in der Nähe des Endes aufweist.

8. Aufbau nach einem der vorhergehenden Ansprüche bei dem mindestens die eine der zwei Schalen oder eventuell das oder eines der Zwischenelemente (32) mit Energieabsorptionsmitteln (50) in der Nähe wenigstens eines Querendes mindestens einer Schale versehen ist.

9. Aufbau nach einem der vorhergehenden Ansprüche, wobei ein elastisches Element (44; 78) zwischen dem oder mindestens einem Bauteil (36; 68) und mindestens einer der Schalen (28, 30; 60, 62) derart angeordnet ist, dass auf das Bauteil eine Rückstellkraft ausgeübt wird.

10. Aufbau nach einem der vorhergehenden Ansprüche, wobei mindestens eine der Schalen (28, 30; 60, 62) mindestens teilweise aus einem elektrisch leitenden Werkstoff hergestellt ist, wie zum Beispiel aus einem metallischen Werkstoff, und insbesondere mindestens eine metallische Schicht auf im Wesentlichen ihrer gesamten Oberfläche aufweist.

11. Aufbau nach einem der vorhergehenden Ansprüche, wobei Luftzirkulationsmittel in der Aufnahme eingerichtet sind, wobei vorzugsweise mindestens eine Schale ausgebildet ist, um derartige Mittel zu bilden.

12. Fahrzeugteil (24; 26), das dazu bestimmt ist, mit mindestens einem Längsaufbauelement (14) einer Fahrzeugkarosserie verbunden zu sein, das sich an einem Seitenrand dieser befindet, das Folgendes aufweist:
- mindestens zwei Schalen (28, 30; 60, 62), die derart überlagert sind, dass sie eine Aufnahme (31; 66) zwischeneinander bilden,
- mindestens ein Batteriebauteil (36; 68), das mindestens eine Energiespeichereinheit, die in der Aufnahme eingerichtet ist, aufweist,
- mindestens ein Befestigungselement (46; 72), das eine Schale mit einem Organ (36, 44) verbindet, das sich in der Aufnahme befindet, oder mit der anderen Schale (28, 30; 60, 62),
- wobei das Teil **dadurch gekennzeichnet ist, dass** das oder die Befestigungselemente derart eingerichtet sind, dass sich das oder mindestens eines der Batteriebauteile entlang der Überlagerungsrichtung in Kompression befindet.

## Claims

1. Vehicle structure (10), comprising a longitudinal structural element (14) at each of its side edges, and also:
• at least two essentially horizontal shells (28, 30; 60, 62) that are superposed so as to form a housing (31; 66) between them, each of the shells being connected to at least one of the two longitudinal structural elements (14);
• at least one battery component (36; 68) containing at least one energy storage unit arranged in the housing; and
• at least one fastener element (46; 72) connecting a shell to a member (36, 44) situated in the housing and/or to the other shell (28, 30; 60, 62),
• the structure (10) being **characterized in that** the fastener element(s) are arranged in such a manner that the or at least one of the battery components is in compression in the shell-superposition direction, corresponding essentially to the vertical direction.

2. Structure according to the preceding claim, wherein the or at least one component (36; 68) is in compression between a shell (28, 30; 60, 62) and a member (44, 46a, 72) connected to the other shell.

3. Structure according to the preceding claim, wherein the or at least one fastener element (46a, 46b, 72) bears against the or at least one component or is connected to an attachment member (44) bearing against the or at least one component.

4. Structure according to any preceding claim, wherein each shell has a plurality of transverse ends (37; 67) extending in an essentially horizontal direction, and each component (36; 68) is situated at a distance from a given transverse end of the shell, preferably a distance that is greater than 2 cm, in particular 5 cm.

5. Structure according to any preceding claim, wherein both shells (28, 30; 60, 62) are also connected together at their transverse ends, directly or with the help of at least one intermediate element (32), such that the housing (31; 62) forms a closed cavity, preferably with an interposed gasket (34) such that the cavity is leaktight.

6. Structure according to the preceding claim, wherein the assembly formed by the shells (28, 30; 60, 62) and optionally by the intermediate element(s) (32) constitutes a single-piece part (24, 26) suitable for being fitted in one operation relative to the longitudinal structural element(s) (14).

7. Structure according to any preceding claim, wherein at least one shell (28, 30; 60, 62) is shaped at at least one of its transverse ends (37, 67) to absorb the energy due to an impact of the high-speed type, said end being constituted in particular by the or one of the ends situated at a distance from the components, the shell preferably including a hollow body (49) or corrugations (80) in the vicinity of the end.

8. Structure according to any preceding claim, wherein at least one of the two shells and possibly the or one of the intermediate elements (32) is/are provided with energy absorber means (50) in the vicinity of at least one transverse end of at least one shell.

9. Structure according to any preceding claim, wherein resilient means (44; 78) are arranged between the or at least one component (36; 68) and at least one of the shells (28, 30; 60, 62) so as to exert a return force on the component.

10. Structure according to any preceding claim, wherein at least one of the shells (28, 30; 60, 62) is made at least in part out of an electrically conductive material, such as a metal material, and includes in particular at least one metal layer over essentially its entire surface.

11. Structure according to any preceding claim, wherein air flow means are arranged in the housing, preferably at least one shell is shaped to form such means.

12. Vehicle part (24; 26) for connecting to at least one longitudinal structural element (14) of a vehicle body and situated at a side edge of the part, comprising:
• at least two shells (28, 30; 60, 62) superposed so as to form a housing (31; 66) between them;
• at least one battery component (36; 68) comprising at least one energy storage unit arranged in the housing; and
• at least one fastener element (46; 72) connecting a shell to a member (36, 44) situated in the housing or to the other shell (28, 30; 60, 62),
• the part being **characterized in that** the fastener element(s) are arranged in such a manner that the or at least one battery component is in compression in the superposition direction.
